(19) Europäisches Patentamt
European Patent Office
Office européen des brevets

(11) EP 2 420 399 A1

(12) EUROPEAN PATENT APPLICATION
published in accordance with Art. 153(4) EPC

(43) Date of publication:
22.02.2012 Bulletin 2012/08

(51) Int Cl.:
B60H 1/32 (2006.01)          F04B 49/06 (2006.01)
F25B 1/00 (2006.01)

(21) Application number: 10777573.6

(22) Date of filing: 19.05.2010

(86) International application number:
PCT/JP2010/003374

(87) International publication number:
WO 2010/134336 (25.11.2010 Gazette 2010/47)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 20.05.2009 JP 2009121823

(71) Applicant: Sanden Corporation
Isesaki-shi, Gunma 372-8502 (JP)
(72) Inventors:
• ISHIZEKI, Tetsuya
Isesaki-shi
Gunma 372-8502 (JP)

• HIGUCHI, Teruo
Isesaki-shi
Gunma 372-8502 (JP)
• AMADA, Norimasa
Isesaki-shi
Gunma 372-8502 (JP)

(74) Representative: Prüfer & Partner GbR
European Patent Attorneys
Sohnckestrasse 12
81479 München (DE)

(54) DRIVING TORQUE-CALCULATING DEVICE FOR VARIABLE DISPLACEMENT COMPRESSOR, AND AIR CONDITIONING SYSTEM FOR VEHICLE

(57)     [Summary]

[Purpose] To provide a variable displacement compressor driving torque calculation device easily adaptable to vehicle designs, and thus, highly versatile, and an automotive air-conditioning system equipped with this device.

[Solution] The driving torque calculation device comprises a radiator-inlet refrigerant pressure sensor (46) for detecting pressure of the refrigerant at an inlet of a radiator (24), a radiator-outlet refrigerant pressure sensor (48) for detecting pressure of the refrigerant at an outlet of the radiator (24), a rotational speed detection means for detecting rotational speed of the variable displacement compressor (100), a suction pressure detection means for detecting suction pressure with which the variable displacement compressor (100) sucks the refrigerant, and a calculation means for calculating driving torque on the variable displacement compressor (100) on the basis of the pressures of the refrigerant at the inlet and the outlet of the radiator (24), the rotational speed of the variable displacement compressor (100) and the suction pressure.

FIG. 1

## Description

### Technical Field

This invention relates to a variable displacement compressor driving torque calculation device and an automotive air-conditioning system.

### Background Art

An automotive air-conditioning system includes a system for performing a refrigeration cycle (refrigeration cycle system). The refrigeration cycle system has a circulation path along which a refrigerant circulates as a working fluid. In the circulation path, a compressor, a radiator (condenser), an expander (expansion valve) and an evaporator are arranged serially.

To the compressor, power (driving torque) is transmitted from an engine by a belt. Thus, from a viewpoint of control over the vehicle engine, the compressor is a load, and particularly at high outside air temperature, affects vehicle drivability including acceleration performance, and fuel efficiency.

From a viewpoint of control over the automotive air-conditioning system, variations in engine rotational speed lead to variations in compressor rotational speed, and thus, destabilize the refrigeration cycle and cause variations in passenger compartment temperature.

To deal with this, compressor driving torque is calculated for use in engine control. For example, a variable displacement compressor driving torque calculation device disclosed in patent document 1 has a plurality of compressor driving torque maps prepared for differing compressor discharge-side pressures. The calculation device chooses an optimal compressor driving torque map for a current compressor discharge-side pressure, identifies, in the chosen map, a proportional characteristic at a current rotational speed of the driven compressor, and calculates a compressor driving torque at a current refrigerant flow rate from the identified proportional characteristic.

There are various types of variable displacement compressors, among which, for example an externally-controlled piston-type variable displacement compressor is widely used.

The variable displacement compressor of this type has a displacement control valve, and driving current supplied to the displacement control valve is controlled by an external control device. The control device regulates the driving current so that either suction pressure in the refrigeration cycle system or a pressure difference between two predetermined locations (pressure difference between discharge pressure and suction pressure, for example) will approach a desired value. Regulation of the driving current causes a change in valve position of the displacement control valve, which causes an increase or decrease in pressure in a crank chamber of the compressor, and thus, a change in displacement of the compressor.

### Prior-art Document

### Patent Document

Patent document 1: Japanese Patent Application Laid-open No. 2003-278663 Publication

### Summary of the Invention

### Problem to be Solved by the Invention

In application of the variable displacement compressor driving torque calculation device disclosed in patent document 1 to vehicles, it is necessary to prepare a plurality of sets of compressor driving torque maps, since radiation performance of the radiator varies depending on the design of vehicles, including the shape of a radiator grill. Thus, each time a new vehicle is developed, it is necessary to operate the automotive air-conditioning system on the actual vehicle under 100 or more of different sets of conditions and take measurements of the driving torque and a variety of parameters.

Such preparation of compressor driving torque maps is not only troublesome but also requires a lot of man-hours and costs, and thus, hinders reduction in cost of the automotive air-conditioning system and of the vehicle.

The present invention has been made in consideration of the above problem. An object of the present invention is to provide a variable displacement compressor driving torque calculation device easily adaptable to vehicle designs, and thus, highly versatile, and an automotive air-conditioning system equipped with this device.

**Means for Solving the Problem**

In order to achieve the above object, the present invention provides, as one embodiment, a variable displacement compressor driving toque calculation device for calculating driving torque on a variable displacement compressor, for use in an automotive refrigeration cycle system including the variable displacement compressor, a radiator, an expansion valve and an evaporator, serially arranged in a circulation path in a vehicle along which a refrigerant circulates, and also including a displacement control valve for regulating displacement of the variable displacement compressor and a displacement control means for regulating driving current supplied to the displacement control valve, thereby regulating valve position of the variable displacement valve to control the displacement of the variable displacement compressor, characterized by comprising a radiator-inlet refrigerant pressure sensor for detecting pressure of the refrigerant at an inlet of the radiator, a radiator-outlet refrigerant pressure sensor for detecting pressure of the refrigerant at an outlet of the radiator, a rotational speed detection means for detecting rotational speed of the variable displacement compressor, a suction pressure detection means for detecting suction pressure with which the variable displacement compressor sucks the refrigerant, and a calculation means for calculating the driving torque on the variable displacement compressor on the basis of the pressures of the refrigerant at the inlet and the outlet of the radiator, the rotational speed of the variable displacement compressor and the suction pressure (Claim 1).

Desirably, the calculation means calculates the driving torque by an expression:

$$Tr = \frac{60}{2\pi \cdot Nc} \times \frac{(h_d - h_s)}{\eta_m} \times Gr$$

(where Tr is the driving torque on the variable displacement compressor, Nc the rotational speed of the variable displacement compressor, hd enthalpy of the refrigerant discharged from the variable displacement compressor, hs enthalpy of the refrigerant sucked into the variable displacement compressor, $\eta$m mechanical efficiency of the variable displacement compressor and Gr flow rate of the refrigerant circulating along the circulation path) (claim 2).

Desirably, the calculation means includes a refrigerant flow rate calculation section for calculating the flow rate of the refrigerant circulating along the circulation path on the basis of the pressures of the refrigerant at the inlet and the outlet of the radiator (claim 3).

Desirably, the calculation means includes an enthalpy difference calculation section for calculating a difference between the enthalpy of the refrigerant discharged from the variable displacement compressor and the enthalpy of the refrigerant sucked into the variable displacement compressor, on the basis of the pressure of the refrigerant at the inlet of the radiator, the suction pressure, the flow rate of the refrigerant and the rotational speed of the variable displacement compressor (claim 4).

Desirably, the calculation means includes a machine efficiency calculation section for calculating the machine efficiency on the basis of the pressure of the refrigerant at the inlet of the radiator, the suction pressure and the rotational speed of the variable displacement compressor (claim 5).

Desirably, the calculation means includes a displacement determination means for determining whether the variable displacement compressor is working with a maximum displacement, wherein when the displacement determination means determines that the variable displacement compressor is working with the maximum displacement, the machine efficiency calculation section calculates the machine efficiency on the basis of the pressure of the refrigerant at the inlet of the radiator, the suction pressure, the rotational speed of the variable displacement compressor and the flow rate of the refrigerant circulating along the circulation path (claim 6).

Desirably, the displacement control means regulates the driving current so that the suction pressure will approach a desired value, wherein the calculation means includes a suction pressure calculation means for calculating the suction pressure on the basis of the driving current (claim 7).

Desirably, the calculation means includes a displacement determination means for determining whether the variable displacement compressor is working with a maximum displacement, wherein when the displacement determination means determines that the variable displacement compressor is working with the maximum displacement, the suction pressure calculation section calculates the suction pressure on the basis of not the driving current but the pressure of the refrigerant at the inlet of the radiator, the rotational speed of the variable displacement compressor and the flow rate of the refrigerant circulating along the circulation path (claim 8).

The present invention further provides, as one embodiment, an automotive air-conditioning system including the variable displacement compressor driving torque calculation device described above (claim 9).

**Effect of the Invention**

In the variable displacement compressor driving torque calculation device according to the present invention recited in claim 1, the calculation means calculates the driving torque on the variable displacement compressor on the basis of the pressures of the refrigerant at the inlet and the outlet of the radiator, the rotational speed of the variable displacement compressor and the suction pressure, without need for map data. This saves the trouble of preparing map data by operating an automotive air-conditioning system installed on a vehicle under a great number of different sets of conditions and taking measurements of the driving torque and a variety of parameters. This driving torque calculation device is therefore easy to apply to vehicles of different designs, and contributes to reduction in price of automotive air-conditioning systems and of vehicles.

In the variable displacement compressor driving torque calculation device recited in claim 2, the driving torque is accurately calculated by the calculation means using the predetermined expression.

In the variable displacement compressor driving torque calculation device recited in claim 3, the flow rate of the refrigerant circulating along the circulation path is accurately calculated by the refrigerant flow rate calculation section, which leads to accurate calculation of the driving torque.

In the variable displacement compressor driving torque calculation device recited in claim 4, the difference between the enthalpy of the refrigerant discharged from the variable displacement compressor and the enthalpy of the refrigerant sucked into the variable displacement compressor is accurately calculated by the enthalpy difference calculation section, which leads to accurate calculation of the driving torque.

In the variable displacement compressor driving torque calculation device recited in claim 5, the machine efficiency is accurately calculated by the machine efficiency calculation section, which leads to accurate calculation of the driving torque.

In the variable displacement compressor driving torque calculation device recited in claim 6, the machine efficiency at the time that the variable displacement compressor is working with the maximum displacement is accurately calculated by the machine efficiency calculation section, which leads to accurate calculation of the driving torque.

In the variable displacement compressor driving torque calculation device recited in claim 7, the suction pressure is accurately calculated by the suction pressure calculation section, which leads to accurate calculation of the driving torque.

In the variable displacement compressor driving torque calculation device recited in claim 8, the suction pressure at the time that the variable displacement compressor is working with the maximum displacement is accurately calculated by the suction pressure calculation section, which leads to accurate calculation of the driving torque.

In a vehicle equipped with the automotive air-conditioning system recited in claim 9 applied, engine control is optimized by controlling the engine using the value of variable displacement compressor driving torque calculated by the variable displacement compressor driving torque calculation device. This leads to stable operation of the engine and of the automotive air-conditioning system, and thus, increase in vehicle drivability, fuel efficiency, and passenger compartment comfort.

**Brief Description of the Drawings**

FIG. 1 is a diagram schematically showing the configuration of a vehicle equipped with an automotive air-conditioning system which is an embodiment of the present invention,
FIG. 2 is a diagram schematically showing the configuration of a refrigeration cycle system included in the automotive air-conditioning system shown in FIG. 1, where a compressor is shown in vertical cross-section,
FIG. 3 is a diagram showing how a displacement control valve, provided for the compressor shown in FIG. 2, is connected, where the displacement control valve is shown in cross-section,
FIG. 4 is a graph showing relation between driving current supplied to the displacement control valve and suction pressure, observed in the automotive air-conditioning system shown in FIG. 1,
FIG. 5 is a diagram showing signal transmission in the vehicle shown in FIG. 1, and
FIG. 6 is a flow chart showing a program executed by a driving torque calculation device included in the automotive air-conditioning system shown in FIG. 1.

**Mode of Carrying out the Invention**

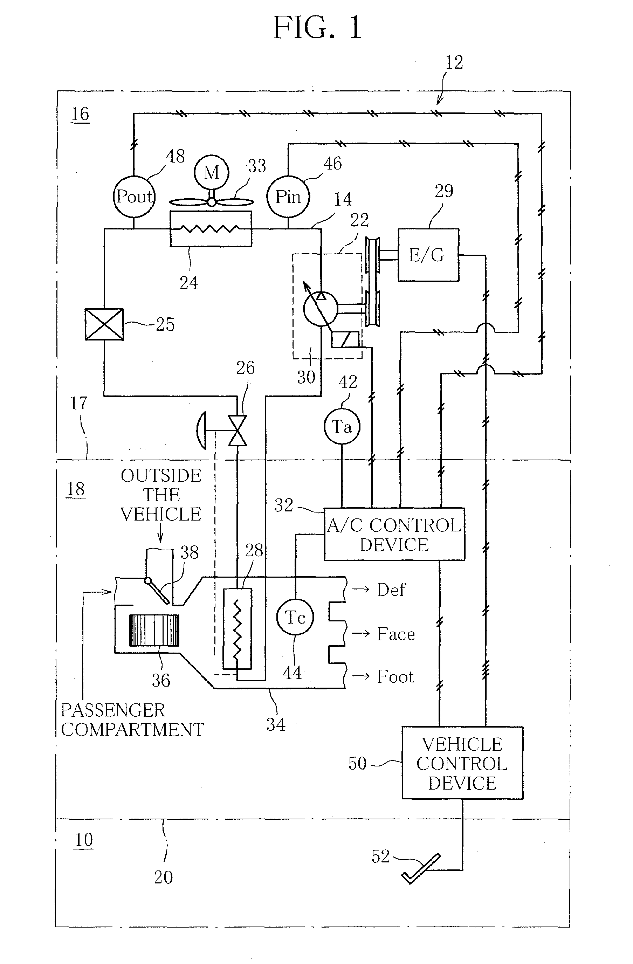

FIG. 1 schematically shows a vehicle equipped with an automotive air-conditioning system which is an embodiment of the present invention. The automotive air-conditioning system can cool a passenger compartment 10 according to a temperature setting set as desired.

The automotive air-conditioning system includes a refrigeration cycle system 12 for performing a refrigeration cycle. The refrigeration cycle system 12 has a circulation path 14 along which a refrigerant is forced to circulate as a working fluid.

The circulation path 14 runs from an engine room 16 into an instrumentation space 18 through a partition 17. The instrumentation space 18 is defined by an instrument panel 20, in front of the passenger compartment 10. In the section of the circulation path 14 running in the engine room 16, a compressor 100, 1 radiator (condenser) 24, a receiver·dryer 25 and an expansion valve 26 are arranged serially in the direction of flow of the refrigerant. In the section of the circulation path 14 running in the instrumentation space 18 is arranged an evaporator 28. The receiver·dryer 25 can be omitted.

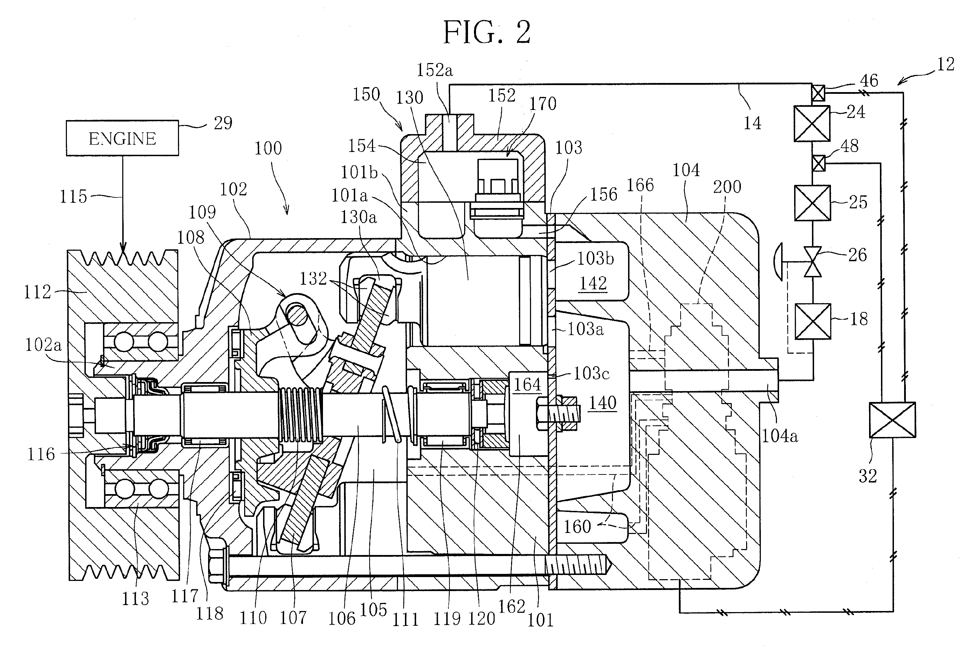

The compressor 100 is mechanically connected to an engine 29 and driven by power from the engine 29. The compressor 100 is, for example a variable displacement piston-type (reciprocating) compressor and includes a displacement control valve 200 as seen in FIG. 2.

More specifically, the compressor 100 is a clutchless swashplate compressor, for example. The compressor 100 includes a cylinder block 101. The cylinder block 101 has a plurality of cylinder bores 101a. To the cylinder block 101, a front housing (crank case) 102 is joined at an end, and a rear housing (cylinder head) 104 is joined at the other end with a valve plate 103 interposed between.

The cylinder block 101 and the front housing 102 define a crank chamber 105, and a drive shaft 106 extends axially across the interior of the crank chamber 105. The drive shaft 106 extends through an annular swashplate 107 arranged inside the crank chamber 105, and the swashplate 107 is hinged to a rotor 108, fixed on the drive shaft 106, by a joint 109. The swashplate 107 can therefore vary in inclination, while moving along the drive shaft 106.

On the drive shaft 106, between the rotor 108 and the swashplate 107, a coil spring 110 is mounted to push on the swashplate 107 toward a minimum inclination angle. On the other side of the swashplate 107, namely between the swashplate 107 and the cylinder block 101, a coil spring 111 is mounted on the drive shaft 106 to push on the swashplate 107 toward a maximum inclination angle.

The drive shaft 106 extends through a boss 102a projecting outward from the front housing 102. At the outer end of the drive shaft 106, a pulley 112 is provided as a power transmission device. The pulley 112 is rotatably attached to the boss 102a by means of a ball bearing 113. Between this pulley 112 and a pulley attached to the engine 29 is passed a belt 115 so that the engine 29 serves as an external drive source.

A shaft sealing device 116 is provided inside the boss 102a to seal the front housing 102. The drive shaft 106 is rotatably supported by bearings 117, 118, 119 and 120 in the radial and thrust directions. Power is transmitted from the engine 29 to the pulley 112, so that the drive shaft 116 can rotate with the pulley 112.

Within the respective cylinder bores 101a are fitted pistons 130. Each piston 130 has an integrally-formed tail portion projecting into the crank chamber 105. The tail portion has a recess 130a, in which a pair of shoes 132 is arranged. The shoes 132 are in sliding contact with the periphery of the swashplate 107 on both sides thereof. Thus, the shoes 132 enable the piston 130 and the swashplate 107 to move in conjunction with each other so that rotation of the drive shaft 106 is converted into reciprocating motion of the piston 130 within its own cylinder bore 101a.

The rear housing 104 defines a suction chamber 140 and a discharge chamber 142. The suction chamber 140 is connected to each cylinder bore 101a by a suction hole 103a in the valve plate 103. The discharge chamber 142 is connected to each cylinder bore 101a by a discharge hole 103b in the valve plate 103. The suction hole 103a and the discharge hole 103b are opened and closed by a suction valve and a discharge valve, not shown, respectively.

Outside the cylinder block 101 is provided a muffler 150. The cylinder block 101 has an integrally-formed muffler base 101b, to which a muffler casing 152 is joined with a sealing member, not shown, interposed between. The muffler casing 152 and the muffler base 101b define a muffler space 154. The muffler space 154 is connected to the discharge chamber 142 by a discharge passage 156 which extends in the wall of the rear housing 104, then through the valve plate 103 and then through the wall of the muffler base 101b.

The muffler casing 152 has a discharge port 152a, and a check valve 170 is provided in the muffler space 154 to block a flow between the discharge passage 156 and the discharge port 152a. The check valve 170 opens or closes depending on a pressure difference between the discharge passage 156 and the muffler space 154. More specifically, the check valve closes when the pressure difference becomes smaller than a predetermined value, and opens when the pressure difference becomes greater than the predetermined value.

Thus, the discharge chamber 142 is connected to the outgoing side of the circulation path 14 by the discharge passage 156, the muffler space 154 and the discharge port 152a, where the check valve 170 allows or blocks a flow from the discharge chamber 142 to the muffler space 154. The suction chamber 140 is connected to the incoming side of the circulation path 14 by a suction port 104a in the rear housing 104.

In the rear housing 104 is arranged a displacement control valve (electromagnetic control valve) 200. The displacement control valve 200 is provided in a gas supply passage 160. The gas supply passage 160 extends in the wall of the rear housing 104 and through the valve plate 103 and the cylinder block 101, thereby connecting the discharge chamber 142 and the crank chamber 105.

The suction chamber 140 is connected to the crank chamber 105 by a gas release passage 162. The gas release passage 162 consists of clearances between the drive shaft 106 and the respective bearings 119, 200, a space 164 and a fixed orifice 103c in the valve plate 103.

The suction chamber 140 is connected to the displacement control valve 200 by a pressure sensing passage 166 extending in the wall of the rear housing 104, independently of the gas supply passage 160.

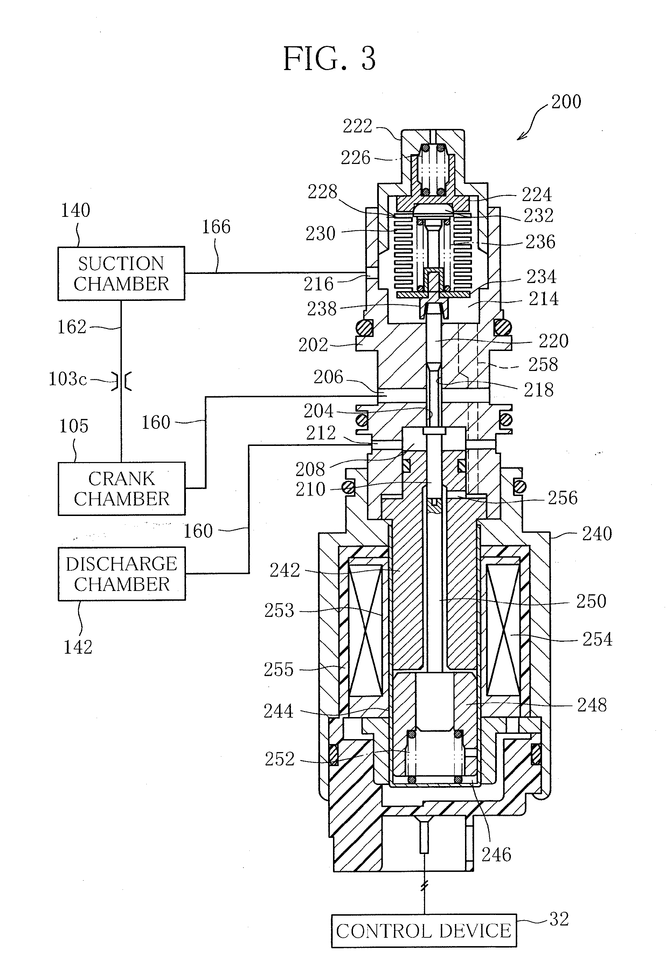

As shown in FIG. 3, the displacement control valve 200 consists of a valve unit and a solenoid unit. The valve unit has a cylindrical valve housing 202. The valve housing 202 has a valve hole 204 inside. The valve hole 204 extends in the axial direction of the valve housing 202, and connects to an outlet port 206 at a first end. The outlet port 206 radially extends through the valve housing 202, so that the valve hole 204 is connected to the crank chamber by the discharge port 206 and the downstream side of the gas supply passage 160.

The valve housing 202 has a valve chamber 208 in an end portion adjacent to the solenoid unit. The valve hole 204 has an open end at the end wall of the valve chamber 208, and thus, connects to the valve chamber 208 at a second end opposite to the aforementioned first end. Inside the valve chamber 208 is arranged a columnar valve element 210. The valve element 210 can move inside the valve chamber 208 in the axial direction of the valve housing 202, and close the valve hole 204 by coming in contact with the end wall of the valve chamber 202, at a first end. The end wall of the valve chamber 202 thus functions as a valve seat.

The valve housing 202 also has an inlet port 212. Also the inlet port 212 radially extends through the valve housing 202. The inlet port 202 is connected to the discharge chamber 142 by the upstream side of the gas supply passage 160. The inlet port 202 has an open end at the side wall of the valve chamber 208, so that the discharge chamber 142 and the crank chamber 105 are connected via the inlet port 212, the valve chamber 208, the valve hole 204 and the outlet port 206.

The valve housing 202 also has a pressure sensing chamber 214 in an end portion remote from the solenoid unit, and a pressure sensing port 216 extending through a side wall of the pressure sensing chamber 214. The pressure sensing chamber 214 is connected to the suction chamber 140 by the pressure sensing port 216 and the pressure sensing passage 166. The valve housing 202 also has an axial hole 218 extending between the pressure sensing chamber 214 and the valve hole 204, coaxially with the valve hole 204.

At a second end of the valve element 210 opposite to the aforementioned first end, a pressure sensing rod 210 is joined integrally and coaxially with the valve element 210. The pressure sensing rod 220 extends inside the valve hole 204 and the axial hole 218 and projects into the pressure sensing chamber 214 at a first end side. The pressure sensing rod 220 has a large-diameter portion at the first end side, which is slidably in contact with the inner surface of the axial hole 218. Thus, gas flow between the pressure sensing chamber 214 and the valve hole 204 is prevented by the large-diameter portion of the pressure sensing rod 220.

In an end portion of the valve housing 202, a cap 222 is press-fitted to provide an end wall of the pressure sensing chamber 214. The cap 222 is in the form of a bottomed stepped cylinder. In the cap 222, a support member 224 is slidably fitted with its cylindrical portion received in the small-diameter portion of the cap 222, and a force-open spring 226 is set between the bottom of the cap 222 and the support member 224.

Inside the pressure sensing chamber 214 is arranged a pressure sensing device 228. The pressure sensing device 228 is fixed to the support member 226 at a first end. The pressure sensing device 228 is thus supported by the support member 224 fitted in the cap 222.

The pressure sensing device 228 includes a bellows 230. The bellows 230 can extract and contract in the axial direction of the valve housing 202. The bellows 230 is hermetically sealed by caps 232, 234 at first and second, ends, respectively, so that the interior of the bellows 230 is kept evacuated (depressurized). Inside the bellows 230 is arranged a compression coil spring 236. The compression coil spring 236 pushes on the caps 232, 234 in the directions in which the bellows 230 expands increasing the distance between the caps 232, 234.

The cap 234 constituting the pressure sensing device 228 is mounted on an adaptor 238, which can come in contact with the pressure sensing rod 220. A pressure decrease in the pressure sensing chamber 214 causes the pressure sensing device 228 to expand and push the pressure sensing rod 220, and thus, the valve element 10 so that the valve is opened.

The amount by which the cap 222 is pressed into the valve housing 202 is determined so that the displacement control valve 200 will behave as desired.

The solenoid unit has a cylindrical solenoid housing 240 coaxially joined to the valve housing 202. Inside the solenoid housing 240 is arranged a cylindrical stationary core 242 coaxially. The stationary core 242 has a first end portion fitted in the valve housing 202, which defines the valve chamber 208 and receives the valve element 210 allowing the sliding thereof.

On the stationary core 242 is fitted a bottomed sleeve 244 to extend from the middle downward beyond a second end of the stationary core opposite to the aforementioned first end. Between the bottom of the sleeve 244 and the second end of the stationary core 242 is defined a core holding space 246, in which a movable core 248 is arranged. The movable core 248 is slidably fitted in the sleeve 244 to be able to reciprocate in the axial direction of the solenoid housing 240.

Inside the stationary core 242 extends a solenoid rod 250. The solenoid rod 250 is in contact with the second end of the valve element 210 at a first end, and integrally fixed to the movable core 248 at a second end opposite to the first end. Thus, a movement of the movable core 248 leads to a valve closure movement of the valve element 210. Between the movable core 248 and the bottom of the sleeve 244 is arranged a compression coil spring 252, which always pushes on the movable core 248 and solenoid rod 250, and thus, the valve element 210 in the direction of the valve closure movement.

Around the sleeve 244 is arranged a cylindrical coil 254 of wire wound on a bobbin 253 (solenoid coil). The coil 254 wound on the bobbin 253 is surrounded by an integrally-molded resin member 255. The solenoid housing 240, the stationary core 242 and the movable core 248 are each made of a magnetic material so that they constitute a magnetic circuit. The sleeve 244 is made of a stainless steel-based non-magnetic material.

The stationary core 242 has a radial hole 256 at the base of the first end portion, and the valve housing 202 has a connection hole 258 connecting the radial hole 256 to the pressure sensing chamber 214. In the region of the middle to the second end portion, the stationary core 242 has an inside diameter greater than the outer diameter of the valve element 210 and of the solenoid rod 250, so that the core holding space 246 connects to the pressure sensing chamber 214 via a clearance produced in the region of the middle to the second end portion of the stationary core 242, the radial hole 256 and the connection hole 258.

Accordingly, the pressure in the crank chamber 105 (crank pressure Pc) acts on the first end face of the valve element 210 as a force tending to open the valve, and the pressure in the suction chamber 140 (suction pressure Ps) acts on the second end face of the valve element 210 as a force tending to close the valve.

The solenoid 254 of the displacement control valve is electrically connected to an air-conditioning control device (A/C control device) 32 provided for controlling the automotive air-conditioning system. The air-conditioning control device 32 regulates the size of driving current I supplied to the solenoid 254, thereby regulating the displacement of the compressor 100. The air-conditioning control device 32 may comprise electric circuits such as ECUs (electronic control units), for example.

When the displacement control valve 200 is used, the displacement is controlled by Ps control, or control of suction pressure Ps with which the compressor 100 sucks the refrigerant. Depending on the type of the displacement control valve, differential pressure control, namely control of difference (Pd-Ps differential pressure) between the pressure in the discharge chamber 142 of the compressor 100, or in other words, pressure with which the compressor 100 discharges the refrigerant (discharge pressure Pd) and the suction pressure Ps can be adopted.

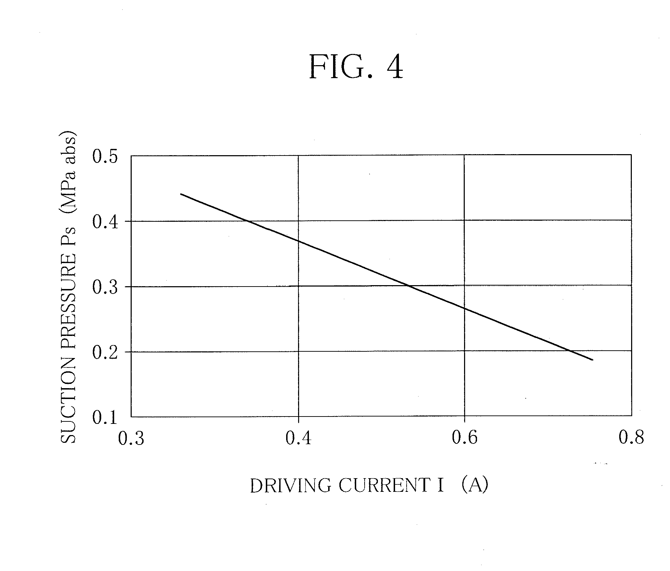

FIG. 4 shows relation between driving current I supplied to the displacement control valve 200 and suction pressure Ps. In Ps control, a setpoint Pss of the suction pressure Ps is set from a variety of information including a passenger compartment temperature setting set by a passenger, and driving current I of a size based on the setpoint Pss is supplied to the solenoid 254. The displacement control valve 200 is thus brought to a valve position causing the suction pressure Ps to approach the setpoint Pss, while the pressure sensing device 228 for sensing the suction pressure Ps expands depending on the suction pressures Ps, thereby finely regulating the valve position to compensate for fluctuations of the suction pressure Ps.

Referring back to FIG. 1, near the radiator 24 is arranged a condenser fan 33. The refrigerant passing through the radiator 24 is cooled by airflow from before the vehicle, caused by the vehicle travelling, and/or airflow from the condenser fan 33.

The expansion valve 26 causes the refrigerant to expand by passing through it. The expansion valve 26 is, for example a thermosensing expansion valve, and the valve position thereof is regulated so that the refrigerant will be at a predetermined superheated temperature at the outlet of the evaporator 28.

The evaporator 28 is arranged inside an air-conditioning unit housing 34. Inside the air-conditioning unit housing 34 are also arranged a blower fan 36 and a heater core (not shown). At an inlet of the air-conditioning unit housing 34 is arranged an inside/outside air switch damper 38 is arranged, and at an outlet of the air-conditioning unit housing 34 is arranged a vent switch damper (not shown).

The refrigerant passing through the evaporator 28 evaporates by being heated by air from the blower fan 36. The air from the blower fan 36 is therefore cooled, or in other words, becomes cold air in the evaporator 28, which flows into and cools the passenger compartment 10.

The automotive air-conditioning system has a group of sensors for obtaining a variety of information, including an outside air temperature sensor 42, an evaporator-outlet air temperature sensor 44, a radiator-inlet refrigerant pressure sensor 46 and a radiator-outlet refrigerant pressure sensor 48. The outside air temperature sensor 42, the evaporator-outlet air temperature sensor 44, the radiator-inlet refrigerant pressure sensor 46 and the radiator-outlet refrigerant pressure sensor 48 are each electrically connected to the air-conditioning control device 32.

To control the operation of the whole vehicle, there is provided a vehicle control system, which includes a vehicle control device (engine control device) 50. Also the vehicle control device 50 may comprise electronic circuits such as ECUs. The vehicle control device 50 mainly controls the rotational speed Ne of the engine 29 on the basis of the passenger's input by operating an accelerator pedal 52 and other control means not shown, including a brake pedal and a shift lever, arranged in the passenger compartment 10.

The vehicle control device 50 also detects the rotational speed Ne of the engine 29 by means of a rotational speed sensor, for example, and feeds detected values of the engine 29 rotational speed Ne. The air-conditioning control device 32 receives those detected values of the engine 29 rotational speed Ne.

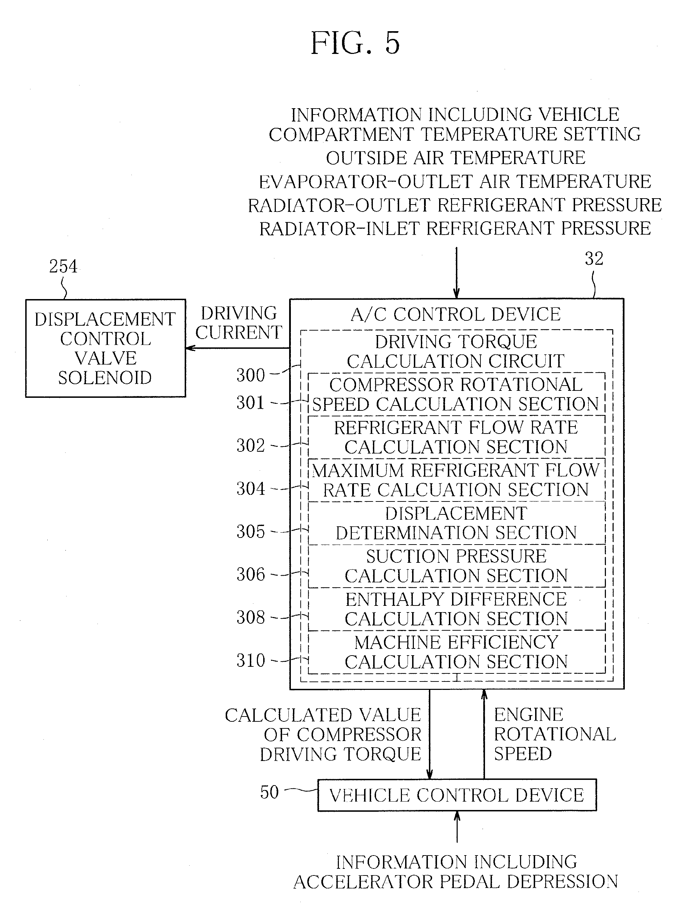

FIG. 5 shows transmission of signals among the solenoid 254 of the displacement control valve 200, the air-conditioning control device 32, the vehicle control device 50 and sensors.

The air-conditioning control device 32 receives information including a passenger compartment 10 temperature setting, via an operation panel, and an outside temperature Ta and an evaporator-outlet air temperature Tc detected by the outside air temperature sensor 42 and the evaporator-outlet air temperature sensor 44, respectively. On the basis of the information received, the air-conditioning control device 32 sets a desired value of driving current I supplied to the solenoid 254 of the displacement control valve 200, and regulates the driving current I to approach the desired value. As a result, the displacement of the variable displacement compressor 100 is regulated to a predetermined value.

The air-conditioning control device 32 also functions as a calculation means for calculating driving torque Tr on the variable displacement compressor 100. For this calculation, the air-conditioning control device 32 receives radiator-inlet refrigerant pressure Pin and radiator-outlet refrigerant pressure Pout, detected by the radiator-inlet refrigerant pressure sensor 46 and the radiator-outlet refrigerant pressure sensor 48, respectively, in addition to the engine 29 rotational speed Ne.

Thus, the air-conditioning control device 32, the engine rotational speed detection means, the radiator-inlet refrigerant pressure sensor 46 and the radiator-outlet refrigerant pressure sensor 48 constitute a compressor 100 driving torque calculation device.

Specifically, the air-conditioning control device 32 includes a circuit for calculating driving torque Tr on the compressor 100 (driving torque calculation circuit) 300. The driving torque calculation circuit 300 includes a compressor rotational speed calculation section 301, a refrigerant flow rate calculation section 302, a maximum refrigerant flow rate calculation section 304, a displacement determination section 305, a suction pressure calculation section 306, and an enthalpy difference calculation section 308 and a machine efficiency calculation section 310.

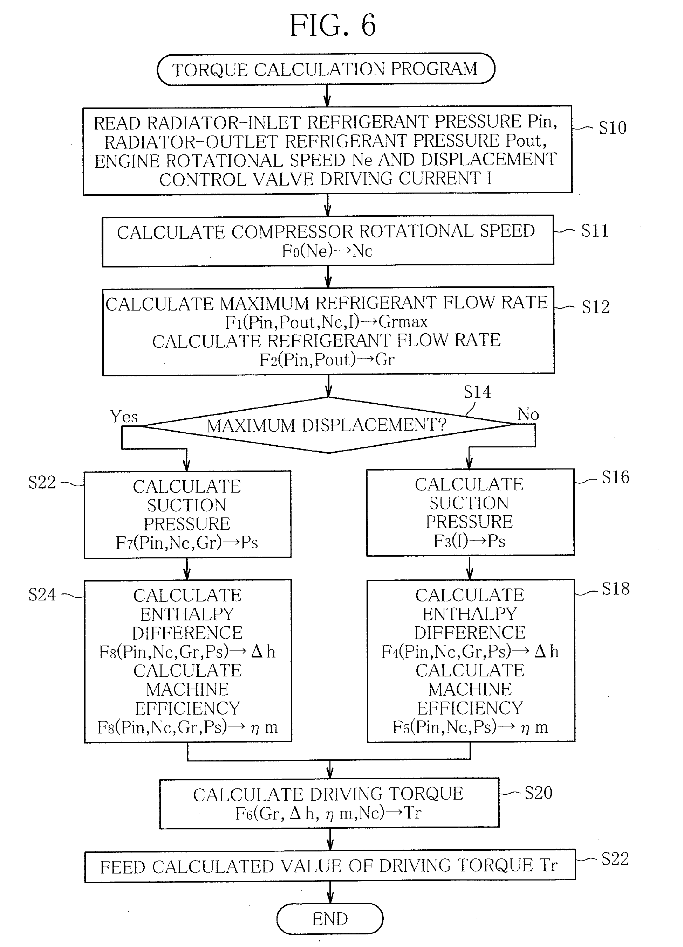

FIG. 6 is a flow chart showing an example of a program for calculating driving torque Tr on the compressor 100, which the driving toque calculation circuit 300 executes at predetermined intervals.

Now, the program will be explained along the processing flow. First, a radiator-inlet refrigerant pressure Pin, a radiator-outlet refrigerant pressure Pout, an engine rotational speed Ne and a driving current I supplied to the displacement control valve 200 are read (S10).

Then, a compressor 100 rotational speed Nc is calculated on the basis of the engine rotational speed Ne (S11). The calculation can be made using a function $F_0(Ne) = Nc$, for example. A coefficient in the function $F_0$ can be determined in advance from a pulley ratio between the engine 29 and the compressor 100.

Next, a maximum refrigerant flow rate Grmax is calculated on the basis of the radiator-inlet refrigerant pressure Pin, the radiator-outlet refrigerant pressure Pout, the compressor rotational speed Nc and the driving current I supplied to the displacement control valve 200 (S12). The maximum refrigerant flow rate Grmax is a flow rate of the refrigerant circulating along the circulation path 14 on the assumption that the compressor 100 is working with a maximum displacement. The calculation can be made using a function $F_1(Pin, Pout, Nc, I) = Grmax$, for example. The function $F_1$ can be determined in advance by a bench test of the automotive air-conditioning system not yet installed on a vehicle. Coefficients in the function $F_1$ can thus be determined independently from the vehicle design.

At step S12, a refrigerant flow rate Gr is calculated on the basis of the radiator-inlet refrigerant pressure Pin and the radiator-outlet refrigerant pressure Pout. The refrigerant flow rate Gr is a flow rate of the refrigerant actually circulating along the circulation path 14. The calculation can be made using a function $F_2(Pin, Pout) = Gr$, for example.

The radiation performance of the radiator 14 differs depending on the vehicle design, including the shape of a radiator grill and the arrangement of the radiator 14 on the vehicle, and thus, coefficients in the function $F_2$ are not fixed.

The coefficients in the function $F_2$ are therefore determined on the basis of measured values of the variables, i.e., the radiator-inlet refrigerant pressure Pin, the radiator-outlet refrigerant pressure Pout and the refrigerant flow rate Gr obtained by operating the automotive air-conditioning system installed on a vehicle, under a small number, for example 10 or so of different sets of conditions.

The driving torque calculation circuit 300 then determines whether the compressor 100 is working with a maximum displacement by comparing the maximum refrigerant flow rate Grmax and the refrigerant flow rate Gr, calculated as described above (S14). If the refrigerant flow rate Gr is greater than or equal to the maximum refrigerant flow rate Grmax (Gr $\geq$ Grmax), it is determined that the compressor 100 is working with the maximum displacement (Yes). If the refrigerant flow rate Gr is less than the maximum refrigerant flow rate Grmax (Gr < Grmax), it is determined that the compressor 100 is not working with the maximum displacement (No).

If the result of determination at step S14 is No, a suction pressure Ps, or pressure with which the compressor 100 is sucking the refrigerant is calculated on the basis of the driving current I supplied to the displacement control valve 200 (S16). The calculation can be made using a function $F_3(I) = Ps$, for example. The function $F_3$, which is exemplified by FIG. 4, can be determined in advance by a bench test of the automotive air-conditioning system not yet installed on a vehicle. A coefficient in the function $F_3$ can thus be determined independently from the vehicle design.

Then, an enthalpy difference $\Delta h$ is calculated on the basis of the radiator-inlet refrigerant pressure Pin, the compressor rotational speed Nc, the refrigerant flow rate Gr and the suction pressure Ps calculated at step S14 (S18). The enthalpy difference $\Delta h$ is a difference (hd-hs) between the enthalpy hd of the refrigerant discharged from the compressor 100 and the enthalpy of the refrigerant sucked into the compressor 100. The calculation can be made using a function $F_4(Pin, Nc, Gr, Ps) = \Delta h$, for example. The function $F_4$ can be determined in advance by a bench test of the automotive air-conditioning system not yet installed on a vehicle. Coefficients in the function $F_4$ can thus be determined independently from the vehicle design.

At step S18, a machine efficiency $\eta m$ of the compressor 100 is calculated on the basis of the radiator-inlet refrigerant pressure Pin, the compressor rotational speed Nc and the suction pressure calculated at step S14. The calculation can be made using a function $F_5(Pin, Nc, Ps) = \eta m$, for example. The function $F_5$ can be determined in advance by a bench test of the automotive air-conditioning system not yet installed on a vehicle. Coefficients in the function $F_5$ can thus be determined independently from the vehicle design.

On the basis of the compressor rotational speed Nc, the refrigerant flow rate Gr, the enthalpy difference $\Delta h$ and the machine efficiency $\eta m$, each calculated as described above, a driving torque Tr on the compressor 100 is calculated (S20). The calculation can be made using a function $F_6(Gr, \Delta h, \eta m, Nc) = Tr$, for example. More specifically, the function $F_5$ is represented by the expression:

$$Tr = k \times \frac{Gr \cdot \Delta h}{\eta_m \cdot Nc} = \frac{60}{2\pi \cdot Nc} \times \frac{(h_d - h_s)}{\eta_m} \times Gr$$

Last, the driving torque calculation device 300 feeds the calculated value of driving torque Tr, which the vehicle control device 50 receives. If the result of determination at step S14 is Yes, a suction pressure Ps is calculated on the basis of the radiator-inlet refrigerant pressure Pin, the compressor rotational speed Nc and the refrigerant flow rate Gr (S22). The calculation can be made using a function $F_7(Pin, Nc, Gr) = Ps$, for example. The function $F_7$ can be determined in advance by a bench test of the automotive air-conditioning system not yet installed on a vehicle. Coefficients in the function $F_7$ can thus be determined independently from the vehicle design.

After step S22, an enthalpy difference $\Delta h$ is calculated on the basis of the radiator-inlet refrigerant pressure Pin, the compressor rotational speed Nc, the refrigerant flow rate Gr and the suction pressure Ps calculated at step S22 (S24). The calculation can be made using a function $F_8(Pin, Nc, Gr, Ps) = \Delta h$, for example. The function $F_8$ can be determined in advance by a bench test of the automotive air-conditioning system not yet installed on a vehicle. Coefficients in the function $F_8$ can thus be determined independently from the vehicle design.

At step S24, a machine efficiency $\eta m$ of the compressor 100 is calculated on the basis of the radiator-inlet refrigerant pressure Pin, the compressor rotational speed Nc and the suction pressure Ps calculated at step S22. The calculation can be made using a function $F_9(Pin, Nc, Gr, Ps) = \eta m$, for example. The function $F_9$ can be determined in advance by a bench test of the automotive air-conditioning system not yet installed on a vehicle. Coefficients in the function $F_9$ can thus be determined independently from the vehicle design.

Then, at step S20, a driving torque Tr is calculated in the same way as in the processing route including steps S16 and S18, except that the enthalpy difference $\Delta h$ and machine efficiency $\eta m$ calculated at step S24 are used. Then, at step S22, the calculated value of driving torque Tr is fed.

In the above-described variable displacement compressor 100 driving torque calculation device, the driving torque calculation circuit 300 calculates the driving torque Tr on the variable displacement compressor 100 on the basis of the pressures Pin, Pout of the refrigerant at the inlet and outlet of the radiator 24, the rotational speed Nc of the variable displacement compressor 100 and the refrigerant suction pressure Ps, without need for map data. This saves the trouble of preparing map data by operating the automotive air-conditioning system installed on a vehicle under a great number, perhaps 1000 or so of different sets of conditions and taking measurements of the driving torque and a variety of parameters. The driving torque calculation device is therefore easy to apply to vehicles of different designs, and contributes to reduction in price of automotive air-conditioning systems and of vehicles.

In the above-described driving torque calculation device, the driving torque Tr is accurately calculated by the driving torque calculation circuit 300 using the predetermined expression.

In the above-described driving torque calculation device, the flow rate of the refrigerant circulating along the circulation path 14 is accurately calculated by the flow rate calculation section 302, which leads to accurate calculation of the driving torque Tr.

In the above-described driving torque calculation device, the enthalpy difference $\Delta h$ is accurately calculated by the enthalpy difference calculation section 308, which leads to accurate calculation of the driving torque Tr.

In the above-described driving torque calculation device, the machine efficiency is accurately calculated by the machine efficiency calculation section 310, which leads to accurate calculation of the driving torque Tr.

In the above-described driving torque calculation device, the suction pressure Ps is accurately calculated by the suction pressure calculation section 306, which leads to accurate calculation of the driving torque Tr.

In the above-described driving torque calculation device, the suction pressure Ps at the time that the variable displacement compressor 100 is working with the maximum displacement is accurately calculated by the suction pressure calculation section 306, which leads to accurate calculation of the driving torque Tr.

In a vehicle equipped with the above-described automotive air-conditioning system, engine control is optimized by controlling the engine 29 using the value of variable displacement compressor 100 driving torque Tr calculated by the driving torque calculation device. This leads to stable operation of the engine 29 and of the automotive air-conditioning system, and thus, increase in vehicle drivability, fuel efficiency, and passenger compartment comfort.

The present invention is not restricted to the above-described embodiment, to which various modifications can be made.

For example, in the described embodiment, the suction pressure Ps, the enthalpy difference $\Delta h$ and the machine efficiency $\eta m$ are calculated in different ways depending on the result of determination at step S14, namely whether the compressor 100 is working with the maximum displacement. Although this is a preferred embodiment, steps S14, S22 and S24 may be omitted.

In the described embodiment, the compressor rotational speed Nc is calculated on the basis of a signal indicative of the engine rotational speed Ne transmitted from the vehicle control device 50. The means for calculating or detecting the compressor rotational speed Nc is however not restricted to this; the compressor rotational speed Nc may be detected directly by a rotational speed sensor.

In the described embodiment, the displacement is controlled by suction pressure control. The present invention is however also applicable to the variable displacement compressor in which the displacement is controlled by Pd-Ps differential pressure control. In this case, at step S16, suction pressure Ps is calculated from driving current I correlating with Pd-Ps differential pressure, and radiator-inlet refrigerant pressure Pin correlating with discharge pressure Pd.

Under high heat loads, the discharge pressure Pd differs from the radiator-inlet refrigerant pressure Pin. The difference can however be appropriately compensated for. This allows a discharge pressure sensor fitted to the compressor 100 to be used as a sensor for detecting the radiator-inlet refrigerant pressure sensor.

In the described embodiment, the driving torque Tr is calculated by calculating the values of functions $F_0$, $F_1$, $F_2$, $F_3$, $F_4$, $F_5$ and $F_6$ or of functions $F_0$, $F_1$, $F_2$, $F_7$, $F_8$, $F_9$ and $F_6$, serially, where some function is involved in another function as a variable. These functions may, of course, be combined appropriately so that the driving torque Tr will be calculated using the resulting combined functions. In sum, the driving torque Tr is calculated by detecting the radiator-inlet refrigerant pressure Pin, the radiator-outlet refrigerant pressure Pout, the driving current I and the compressor rotational speed Ne directly or indirectly through calculation, and preferably using the function $F_6$.

**Explanation of the Reference Characters**

24    Radiator
32    Air-conditioning control device (displacement control means, calculation means)
46    Radiator-inlet refrigerant pressure sensor
48    Radiator-outlet refrigerant pressure sensor
100   Variable displacement compressor
200   Displacement control valve

**Claims**

1. A variable displacement compressor driving toque calculation device for calculating driving torque on a variable displacement compressor, for use in an automotive refrigeration cycle system including the variable displacement compressor, a radiator, an expansion valve and an evaporator, serially arranged in a circulation path in a vehicle along which a refrigerant circulates, and also including a displacement control valve for regulating displacement of the variable displacement compressor and a displacement control means for regulating driving current supplied to the displacement control valve, thereby regulating valve position of the variable displacement valve to control the displacement of the variable displacement compressor, **characterized by** comprising

a radiator-inlet refrigerant pressure sensor for detecting pressure of the refrigerant at an inlet of the radiator, a radiator-outlet refrigerant pressure sensor for detecting pressure of the refrigerant at an outlet of the radiator, a rotational speed detection means for detecting rotational speed of the variable displacement compressor, a suction pressure detection means for detecting suction pressure with which the variable displacement compressor sucks the refrigerant, and

a calculation means for calculating the driving torque on the variable displacement compressor on the basis of the pressures of the refrigerant at the inlet and the outlet of the radiator, the rotational speed of the variable displacement compressor and the suction pressure.

2. The variable displacement compressor driving toque calculation device according to claim 1, **characterized in that** the calculation means calculates the driving torque by an expression:

$$Tr = \frac{60}{2\pi \cdot Nc} \times \frac{(h_d - h_s)}{\eta_m} \times Gr$$

(where Tr is the driving torque on the variable displacement compressor, Nc the rotational speed of the variable displacement compressor, hd enthalpy of the refrigerant discharged from the variable displacement compressor, hs enthalpy of the refrigerant sucked into the variable displacement compressor, ηm mechanical efficiency of the variable displacement compressor and Gr flow rate of the refrigerant circulating along the circulation path).

3. The variable displacement compressor driving toque calculation device according to claim 2, **characterized in that** the calculation means includes a refrigerant flow rate calculation section for calculating the flow rate of the refrigerant circulating along the circulation path on the basis of the pressures of the refrigerant at the inlet and the outlet of the radiator.

4. The variable displacement compressor driving toque calculation device according to claim 2 or 3, **characterized in that** the calculation means includes an enthalpy difference calculation section for calculating a difference between the enthalpy of the refrigerant discharged from the variable displacement compressor and the enthalpy of the refrigerant sucked into the variable displacement compressor, on the basis of the pressures of the refrigerant at the inlet and the outlet of the radiator, the suction pressure, the flow rate of the refrigerant and the rotational speed of the variable displacement compressor.

5. The variable displacement compressor driving toque calculation device according to any of claims 2 to 4, **characterized in that** the calculation means includes a machine efficiency calculation section for calculating the machine efficiency on the basis of the pressure of the refrigerant at the inlet of the radiator, the suction pressure and the rotational speed of the variable displacement compressor.

6. The variable displacement compressor driving toque calculation device according to claim 5, **characterized in that** the calculation means includes a displacement determination means for determining whether the variable displacement compressor is working with a maximum displacement, wherein

when the displacement determination means for determining determines that the variable displacement compressor is working with the maximum displacement, the machine efficiency calculation section calculates the machine efficiency on the basis of the pressure of the refrigerant at the inlet of the radiator, the suction pressure, the rotational speed of the variable displacement compressor and the flow rate of the refrigerant circulating along the circulation path.

7. The variable displacement compressor driving toque calculation device according to any of claims 1 to 6, **characterized in that**

the displacement control means regulates the driving current so that the suction pressure will approach a desired value, wherein

the calculation means includes a suction pressure calculation means for calculating the suction pressure on the basis of the driving current.

8. The variable displacement compressor driving toque calculation device according to claim 7, **characterized in that** the calculation means includes a displacement determination means for determining whether the variable displacement compressor is working with a maximum displacement, wherein
when the displacement determination means for determining determines that the variable displacement compressor is working with the maximum displacement, the suction pressure calculation section calculates the suction pressure on the basis of not the driving current but the pressure of the refrigerant at the inlet of the radiator, the rotational speed of the variable displacement compressor and flow rate of the refrigerant circulating along the circulation path.

9.  An automotive air-conditioning system **characterized by** including a variable displacement compressor driving torque calculation device according to any of claims 1 to 8.

# FIG. 1

# FIG. 2

EP 2 420 399 A1

# FIG. 3

# FIG. 4

# FIG. 5

INFORMATION INCLUDING VEHICLE
COMPARTMENT TEMPERATURE SETTING
OUTSIDE AIR TEMPERATURE
EVAPORATOR-OUTLET AIR TEMPERATURE
RADIATOR-OUTLET REFRIGERANT PRESSURE
RADIATOR-INLET REFRIGERANT PRESSURE

254

| DISPLACEMENT<br>CONTROL<br>VALVE<br>SOLENOID | DRIVING<br>CURRENT | A/C CONTROL DEVICE 32 |

300 —
DRIVING TORQUE
CALCULATION CIRCUIT

301 —
COMPRESSOR ROTATIONAL
SPEED CALCULATION SECTION

302 —
REFRIGERANT FLOW RATE
CALCULATION SECTION

304 —
MAXIMUM REFRIGERANT FLOW
RATE CALCUATION SECTION

305 —
DISPLACEMENT
DETERMINATION SECTION

306 —
SUCTION PRESSURE
CALCULATION SECTION

308 —
ENTHALPY DIFFERENCE
CALCULATION SECTION

310 —
MACHINE EFFICIENCY
CALCULATION SECTION

CALCULATED VALUE
OF COMPRESSOR
DRIVING TORQUE

ENGINE
ROTATIONAL
SPEED

50 — VEHICLE CONTROL DEVICE

INFORMATION INCLUDING
ACCELERATOR PEDAL DEPRESSION

# FIG. 6

$$\text{TORQUE CALCULATION PROGRAM}$$

READ RADIATOR-INLET REFRIGERANT PRESSURE Pin, RADIATOR-OUTLET REFRIGERANT PRESSURE Pout, ENGINE ROTATIONAL SPEED Ne AND DISPLACEMENT CONTROL VALVE DRIVING CURRENT I — S10

CALCULATE COMPRESSOR ROTATIONAL SPEED $F_0(Ne) \rightarrow Nc$ — S11

CALCULATE MAXIMUM REFRIGERANT FLOW RATE $F_1(Pin,Pout,Nc,I) \rightarrow Grmax$ CALCULATE REFRIGERANT FLOW RATE $F_2(Pin,Pout) \rightarrow Gr$ — S12

Yes ← MAXIMUM DISPLACEMENT? → No — S14

S22 — CALCULATE SUCTION PRESSURE $F_7(Pin,Nc,Gr) \rightarrow Ps$

CALCULATE SUCTION PRESSURE $F_3(I) \rightarrow Ps$ — S16

S24 — CALCULATE ENTHALPY DIFFERENCE $F_8(Pin,Nc,Gr,Ps) \rightarrow \Delta h$ CALCULATE MACHINE EFFICIENCY $F_8(Pin,Nc,Gr,Ps) \rightarrow \eta m$

CALCULATE ENTHALPY DIFFERENCE $F_4(Pin,Nc,Gr,Ps) \rightarrow \Delta h$ CALCULATE MACHINE EFFICIENCY $F_5(Pin,Nc,Ps) \rightarrow \eta m$ — S18

CALCULATE DRIVING TORQUE $F_6(Gr, \Delta h, \eta m,Nc) \rightarrow Tr$ — S20

FEED CALCULATED VALUE OF DRIVING TORQUE Tr — S22

$$\text{END}$$

<table>
<tr><td colspan="2" align="center">**INTERNATIONAL SEARCH REPORT**</td><td colspan="2">International application No.<br>PCT/JP2010/003374</td></tr>
</table>

**A. CLASSIFICATION OF SUBJECT MATTER**
*B60H1/32*(2006.01)i, *F04B49/06*(2006.01)i, *F25B1/00*(2006.01)i

According to International Patent Classification (IPC) or to both national classification and IPC

**B. FIELDS SEARCHED**

Minimum documentation searched (classification system followed by classification symbols)
B60H1/32, F04B49/06, F25B1/00

Documentation searched other than minimum documentation to the extent that such documents are included in the fields searched
Jitsuyo Shinan Koho          1922–1996   Jitsuyo Shinan Toroku Koho   1996–2010
Kokai Jitsuyo Shinan Koho    1971–2010   Toroku Jitsuyo Shinan Koho   1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2009-63179 A  (Sanden Corp.),<br>26 March 2009 (26.03.2009),<br>paragraphs [0042] to [0044], [0055] to [0065];<br>fig. 1 to 5<br>& WO 2009/031425 A1 | 1-5,7,9<br>6,8 |
| Y<br>A | JP 2003-278663 A  (Calsonic Kansei Corp.),<br>02 October 2003 (02.10.2003),<br>paragraphs [0022], [0030] to [0042]; fig. 4 to<br>5<br>(Family: none) | 1-5,7,9<br>6,8 |
| Y<br>A | JP 2005-219576 A  (Calsonic Kansei Corp.),<br>18 August 2005 (18.08.2005),<br>paragraphs [0056] to [0058]; fig. 1 to 2<br>(Family: none) | 2-5<br>6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 June, 2010 (17.06.10) | Date of mailing of the international search report<br>29 June, 2010 (29.06.10) |
|---|---|
| Name and mailing address of the ISA/<br>Japanese Patent Office | Authorized officer |
| Facsimile No. | Telephone No. |

Form PCT/ISA/210 (second sheet) (July 2009)

19

**INTERNATIONAL SEARCH REPORT**

International application No.

PCT/JP2010/003374

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2002-276557 A  (Toyota Industries Corp.),<br>25 September 2002 (25.09.2002),<br>paragraphs [0051] to [0053]<br>& US 6557360 B2        & EP 1243449 A2<br>& BR 201020 A          & KR 10-2002-0075206 A<br>& CN 1382596 A | 5<br>6 |
| A | JP 2004-299667 A  (Sanden Corp.),<br>28 October 2004 (28.10.2004),<br>paragraphs [0025] to [0027]<br>& US 2004/0221594 A1    & CN 1539662 A | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003278663 A